# EUROPEAN PATENT APPLICATION

(11) **EP 4 647 825 A1**
(43) Date of publication of application: **12.11.2025**
(21) Application number: 25174494.2
(22) Date of filing: 06.05.2025
(51) Int. Cl.: G02B 6/44

(54) **SYSTEMS, METHODS, AND DEVICES FOR SECURING TUBES WITHIN FIBER OPTIC ENCLOSURES**

(30) Priority: 06.05.2024 US 202463642899 P
(71) Applicant: Corning Research & Development Corporation, Corning, New York 14831 (US)
(72) Inventor: LUTTERKORDT, Ulrich, 42111 Wuppertal (DE); ZAPPEK, Andreas, 46539 Dinslaken (DE)
(74) Representative: Reddie & Grose LLP

(57) **Abstract**

Systems are provided that include a first sealing element comprising a first foam element with a first plurality of holes and a second sealing element comprising a second foam element with a second plurality of holes. The first sealing element and the second sealing element are movable relative to each other between unlocked and locked positions. When unlocked, the first and second pluralities of holes are aligned to enable insertion or removal of a tube in corresponding aligned holes of the first foam element and the second foam element, and when locked, the first sealing element and the second sealing element are displaced relative to each other such that the first foam element and the second foam element apply a compressive force on an outer wall of the tube inserted therethrough to secure the at least one tube therein.

## Description

### PRIORITY APPLICATION

This application claims the benefit of priority of U.S. Provisional Application No. 63/642,899, filed on May 6, 2024, the content of which is relied upon and incorporated herein by reference in its entirety.

### FIELD OF THE DISCLOSURE

Embodiments of the present disclosure relate generally to network communications equipment and, more particularly, to devices and systems for securing tubes within an enclosure, such as within communications equipment cabinets and other enclosures.

### BACKGROUND OF THE DISCLOSURE

Cables (such as those used to carry communication optical fiber) are often routed in and out of communications equipment cabinets and other enclosures in order to connect with various communications equipment. Such communications equipment cabinets and other enclosures are sometimes designed to guide certain incoming optical fiber or cables into tubes. A common sealing solution for such tubes includes a simple foam plate with round holes in which each single tube can be pushed through. For current solutions, the diameters of the holes are smaller than the diameters of the tubes. This leads to a complicated task of pushing the tubes through the holes in the foam plate. That is, a high force is needed from the installer to successfully push each tube through the corresponding hole in the foam plate. Further, many current solutions require each tube to be secured individually using a zip-tie or other connection. This is often time consuming, cumbersome, and thus cost inefficient.

Improvements in the foregoing are desired.

### BRIEF SUMMARY OF THE DISCLOSURE

Embodiments of the present disclosure provide for various systems, devices, enclosures, and methods that cure many of the above noted defects and difficulties. In this regard, various embodiments of the present disclosure provide systems, devices, enclosures, and methods for securing and/or sealing at least one tube within an enclosure in a manner that requires minimal effort and time from an installer. Such solutions include foam elements with holes that secure and seal tubes within them in a quick and efficient manner while also protecting from dust and other particles.

As noted herein, current enclosures contain singular foam elements with holes having diameters that are smaller than diameters of tubes that need to be installed. This reduces efficiency for installing the tubes because the tubes have to be forced through the holes with smaller diameters, which is time consuming, cumbersome, and difficult. Further, zip ties and other connections then have to be installed one-at-a-time, which is a cumbersome task. The solution disclosed herein allows for multiple tubes to be installed at once through holes having diameters that are equal to or greater than the diameters of the tubes. All of the tubes (within the holes) are then secured and/or sealed at the same time via a displacement of the foam elements in which the holes are disposed. This eliminates the cumbersome tasks of installing tubes within holes having smaller diameters than the diameters of the tubes and individually zip-tying (or otherwise connecting) each tube. In this way, the solution disclosed herein allows for easy installation of many tubes at once, all while still providing the sealing protection of the foam in a combined action with compression forces that provide strain relief to the tubes - thereby eliminating the need for individual zip-ties or other connection features.

The systems, devices, enclosures, and methods disclosed herein include first and second sealing elements that each contain a foam element including a plurality of holes. The first and second sealing elements are configured and positioned with respect to each other such that, when one or both of the first and/or second sealing elements are moved from an unlocked position to a locked position, the plurality of holes in the foam element of the first sealing element and the plurality of holes in the foam element of the second sealing element move from being aligned with each other to being intentionally misaligned. The pluralities of holes are configured with diameters that are either equal to or greater than diameters of tubes that are to be installed within them. The intentional misalignment that occurs when the first sealing element and the second sealing element are moved from the unlocked position to the locked position to cause the tubes to be secured and/or sealed without any of the pluralities of holes having to have diameters that are smaller than the diameters of the tubes. This enables an installer to quickly install a number of tubes in an efficient and easy manner, thereby saving time, costs, and exertion.

In an example embodiment, a system for securing at least one tube within an enclosure is provided. The at least one tube includes an outer wall surrounding an inner hollow opening configured to contain at least one of a cable or an optical fiber therethrough. The system includes a first sealing element including a first foam element with a first surface and an opposing second surface. The first sealing element includes a first plurality of holes that each extend through the first foam element from the first surface to the second surface. The system also includes a second sealing element including a second foam element with a first surface and an opposing second surface. The first surface of the second foam element is positioned below the second surface of the first foam element, and the second sealing element includes a second plurality of holes that each extend through the second foam element from the first surface to the second surface. At least one of the first sealing element or the second sealing element is movable relative to an other of the first sealing element or the second sealing element between an unlocked position and a locked position. When in the unlocked position, the first plurality of holes and the second plurality of holes are aligned to enable insertion or removal of the at least one tube in corresponding aligned holes of the first foam element and the second foam element. When in the locked position, the at least one of the first sealing element or the second sealing element is displaced relative to the other of the first sealing element or the second sealing element such that the first foam element and the second foam element apply a compressive force on an outer wall of the at least one tube inserted therethrough to secure the at least one tube therein.

In some embodiments, the first sealing element may include a first frame that further includes one or more first slots that support the first foam element, and the second sealing element may include a second frame that further includes one or more second slots that support the second foam element.

In some embodiments, the system may further include a base that includes a first surface, and the first surface of the base may be positioned adjacent to the second surface of the second foam element.

In some embodiments, the system may further include at least one side rail adjacent to each of the first sealing element and the second sealing element, the at least one side rail including at least one guide slot configured to receive at least one tab of at least one of the first sealing element or the second sealing element.

In some embodiments, the at least one tab may extend from or be attached to at least one of the first sealing element or the second sealing element, and the at least one tab may be disposed at least partially within the at least one guide slot. The at least one tab may be smaller than the at least one guide slot such that the at least one tab is able to slide between the unlocked position and the locked position along the at least one guide slot.

In some embodiments, the at least one tab may include a first longitudinal axis that forms a non-zero angle with a second longitudinal axis of the at least one of the first sealing element or the second sealing element.

In some embodiments, the at least one tab may include a first longitudinal axis that is parallel with a second longitudinal axis of the at least one of the first sealing element or the second sealing element.

In some embodiments, the at least one guide slot may be a first guide slot and a second guide slot, and the at least one tab may be a first tab and a second tab. The first tab may extend from or be attached to the first sealing element, and the first tab may be disposed at least partially within the first guide slot. The second tab may extend from or be attached to the second sealing element, and the second tab may be disposed at least partially within the second guide slot.

In some embodiments, the first tab may include a first longitudinal axis that forms a first non-zero angle with a second longitudinal axis of the first sealing element, and the second tab may include a third longitudinal axis that forms a second non-zero angle with a fourth longitudinal axis of the second sealing element.

In some embodiments, each of the first plurality of holes and the second plurality of holes may have a diameter that is larger than the outer diameter of the at least one tube when the at least one of the first sealing element or the second sealing element is in the unlocked position.

In some embodiments, the first sealing element and the second sealing element may each include a frame comprised of metal.

In some embodiments, the first surface of the second foam element may be parallel with the second surface of the first foam element.

In some embodiments, each of the first sealing element and the second sealing element may be movable relative to the other of the first sealing element or the second sealing element between the unlocked position and the locked position.

In some embodiments, a distance between the first surface of the second foam element and the second surface of the first foam element may decrease when the first sealing element and the second sealing element are moved from the unlocked position to the locked position.

In some embodiments, the system may be configured to prevent the at least one tube from being bent, curved, or deformed beyond a predetermined threshold when the at least one tube is secured by the at least one of the first sealing element or the second sealing element being moved to the locked position.

In some embodiments, a compressive force may be applied by the first foam element and the second foam element when the at least one of the first sealing element or the second sealing element is moved to the locked position is distributed evenly on the outer wall of the at least one tube.

In some embodiments, the first plurality of holes may be arranged in a first series of columns, and the second plurality of holes may be arranged in a second series of columns.

In some embodiments, the first plurality of holes may be arranged so as to create a first matrix of holes, and the second plurality of holes may be arranged so as to create a second matrix of holes.

In some embodiments, the first matrix of holes may include a first set of input holes and a first set of output holes, and the second matrix of holes may include a second set of input holes and a second set of output holes.

In another example embodiment, a method for securing at least one tube within an enclosure is provided. The at least one tube includes an outer wall surrounding an inner hollow opening configured to contain at least one of a cable or an optical fiber therethrough. The method includes providing a first sealing element that includes a first foam element with a first surface and an opposing second surface. The first sealing element includes a first plurality of holes that each extend through the first foam element from the first surface to the second surface. The method also includes providing a second sealing element that includes a second foam element with a first surface and an opposing second surface. The first surface of the second foam element is positioned below the second surface of the first foam element, and the second sealing element includes a second plurality of holes that each extend through the second foam element from the first surface to the second surface. The method also includes positioning the at least one tube in corresponding aligned holes of the first foam element and the second foam element when the first sealing element and the second sealing element are in an unlocked position. At least one of the first sealing element or the second sealing element is movable relative to an other of the first sealing element or the second sealing element between the unlocked position and a locked position. The method also includes moving the at least one of the first sealing element or the second sealing element to the locked position such that the at least one of the first sealing element or the second sealing element is displaced relative to the other of the first sealing element or the second sealing element such that the first foam element and the second foam element apply a compressive force on an outer wall of the at least one tube inserted therethrough to secure the at least one tube therein.

In some embodiments, a distance between the first surface of the second sealing element and the second surface of the first sealing element may decrease when the first sealing element and the second sealing element are moved from the unlocked position to the locked position.

In some embodiments, the first sealing element may include a first frame that further includes one or more first slots that support the first foam element, and the second sealing element may include a second frame that further includes one or more second slots that support the second foam element.

In another example embodiment, a device for securing at least one tube within an enclosure is provided. The at least one tube includes an outer wall surrounding an inner hollow opening configured to contain at least one of a cable or an optical fiber therethrough. The device includes a first sealing element that includes a first foam element with a first surface and an opposing second surface, and the first sealing element includes a first plurality of holes that each extend through the first foam element from the first surface to the second surface. The device also includes a second sealing element that includes a second foam element with a first surface and an opposing second surface. The first surface of the second foam element is positioned below the second surface of the first foam element, and the second sealing element includes a second plurality of holes that each extend through the second foam element from the first surface to the second surface. At least one of the first sealing element or the second sealing element is movable relative to an other of the first sealing element or the second sealing element between an unlocked position and a locked position. When in the unlocked position, the first plurality of holes and the second plurality of holes are aligned to enable insertion or removal of the at least one tube in corresponding aligned holes of the first foam element and the second foam element. When in the locked position, the at least one of the first sealing element or the second sealing element is displaced relative to the other of the first sealing element or the second sealing element such that the first foam element and the second foam element apply a compressive force on an outer wall of the at least one tube inserted therethrough to secure the at least one tube therein.

In another example embodiment, an enclosure configured for securing at least one tube is provided. The at least one tube includes an outer wall surrounding an inner hollow opening configured to contain at least one of a cable or an optical fiber therethrough. The enclosure includes a housing and a first sealing element within the housing. The first sealing element includes a first foam element with a first surface and an opposing second surface, and the first sealing element includes a first plurality of holes that each extend through the first foam element from the first surface to the second surface. The enclosure also includes a second sealing element within the housing. The second sealing element includes a second foam element with a first surface and an opposing second surface, and the first surface of the second foam element is positioned below the second surface of the first foam element. The second sealing element includes a second plurality of holes that each extend through the second foam element from the first surface to the second surface. At least one of the first sealing element or the second sealing element is movable relative to an other of the first sealing element or the second sealing element between an unlocked position and a locked position. When in the unlocked position, the first plurality of holes and the second plurality of holes are aligned to enable insertion or removal of the at least one tube in corresponding aligned holes of the first foam element and the second foam element. When in the locked position, the at least one of the first sealing element or the second sealing element is displaced relative to the other of the first sealing element or the second sealing element such that the first foam element and the second foam element apply a compressive force on an outer wall of the at least one tube inserted therethrough to secure the at least one tube therein.

In another example embodiment, a system for securing at least one tube within an enclosure is provided. The at least one tube includes an outer wall surrounding an inner hollow opening configured to contain at least one of a cable or an optical fiber therethrough. The system includes a first sealing element with a first surface and an opposing second surface, and the first sealing element includes a first plurality of holes that each extend through the first sealing element from the first surface to the second surface. The system also includes a second sealing element with a first surface and an opposing second surface, and the first surface of the second sealing element is positioned below the second surface of the first sealing element. The second sealing element includes a second plurality of holes that each extend through the second sealing element from the first surface to the second surface. The first sealing element and the second sealing element are movable relative to each other between an unlocked position and a locked position. When in the unlocked position, the first plurality of holes and the second plurality of holes are aligned to enable insertion or removal of the at least one tube in corresponding aligned holes of the first sealing element and the second sealing element. When in the locked position, the first sealing element and the second sealing element are displaced relative to each other such that the first sealing element and the second sealing element apply a compressive force on an outer wall of the at least one tube inserted therethrough to secure the at least one tube therein.

### BRIEF DESCRIPTION OF THE DRAWINGS

Having thus described embodiments of the present disclosure in general terms, reference will now be made to the accompanying drawings, which are not necessarily drawn to scale, and wherein:
FIG. 1 shows an example passive optical network layout, in accordance with some embodiments disclosed herein, in accordance with some embodiments discussed herein;
FIG. 2 illustrates a perspective view of an optical fiber distribution cabinet with an example system for securing and/or sealing one or more tubes and an example tube installed through the system, with the tube having cable or optical fiber running therethrough, the cable or optical fiber having come from a cable/optical fiber management panel, in accordance with some embodiments discussed herein;
FIG. 3 illustrates a perspective view of the optical fiber distribution cabinet of FIG. 2 with an example bending of another example tube to receive cable or optical fiber, in accordance with some embodiments discussed herein;
FIG. 4A illustrates a front view of an example system for securing and/or sealing one or more tubes, the system being in an unlocked position, in accordance with some embodiments discussed herein;
FIG. 4B illustrates a front view of the system for securing and/or sealing one or more tubes of FIG. 4A, the system being in a locked position, in accordance with some embodiments discussed herein;
FIG. 5A illustrates a zoomed-in perspective view of the system for securing and/or sealing one or more tubes of FIGs. 4A-4B, the system being in the unlocked position, in accordance with some embodiments discussed herein;
FIG. 5B illustrates a zoomed-in perspective view of the system for securing and/or sealing one or more tubes of FIGs. 4A-5A, the system being in the locked position, in accordance with some embodiments discussed herein;
FIG. 6 illustrates a side view of the system for securing and/or sealing one or more tubes of FIGs. 4A-5B, the system being in the locked position, in accordance with some embodiments discussed herein; and
FIG. 7 illustrates a flowchart for an example method of securing at least one tube within an enclosure, in accordance with some embodiments discussed herein.

### DETAILED DESCRIPTION

Exemplary embodiments of the present disclosure will be described more fully hereinafter with reference to the accompanying drawings, in which some, but not all embodiments of the present disclosure are shown. Indeed, the present disclosure may be embodied in many different forms and should not be construed as limited to the exemplary embodiments set forth herein; rather, these embodiments are provided so that this disclosure will satisfy applicable legal requirements. Like reference numerals refer to like elements throughout.

Due in part to its extremely wide bandwidth and low noise operation, optical fiber is increasingly being used for a variety of applications, including but not limited to broadband voice, video, and data transmission. Fiber optic communications networks may include a number of interconnection points (such as at which multiple optical fibers are interconnected) and/or connection terminals (e.g., network access point (NAP) enclosures, optical network terminals (ONTs), network interface devices (NIDs)). Accordingly, corresponding fiber optic cables may be managed (e.g., routed through, split, reconfigured, connected, etc.) in many different communications equipment cabinets and other enclosures.

The connection terminals may be used to extend fiber optic communications services to a subscriber. In this regard, fiber optic networks may deliver "fiber-to-the-curb" (FTTC), "fiber-to-the-business" (FTTB), "fiber-to-the-home" (FTTH) and "fiber-to-the-premises" (FTTP), referred to generically as "FTTx". For example, delivering services to subscribers in the last mile connection may occur indoors. Different kinds of buildings may require complicated cabling systems, which can include many separated cables, each one connecting one subscriber. Installation may include making each of the many separated cables connect between a main distribution point (e.g., in the basement or elsewhere in the building) and the end user. Each connection may require a different length and/or diameter of cable, so variations in cable tensions and routing may introduce further tangling or complexities into what may be an already crowded enclosure. Moreover, modifications after initial installation may be required (e.g., due to building or subscriber changes), requiring the installer to reenter the enclosure and quickly make adjustments to cables or optical fibers or tubes containing cables or optical fibers within, which may cause axial strain on cables during cable management activities.

Systems and assemblies according to the present disclosure allow maintenance personnel to secure and/or seal tubes for receipt of fiber optic cables or optical fibers in an improved manner, such as leading into and/or within enclosures, as discussed herein. In this regard, various example systems and assemblies described herein may enable easier installation of such tubes within an enclosure. In some embodiments, example systems and assemblies may be configured to include two or more sealing elements that are slidable relative to each other such that sealing can occur without having to force a tube with a larger outer diameter through a foam hole with a smaller diameter.

Various described systems and assemblies provide for improved compliance by maintenance personnel (including, notably, novice maintenance personnel) by offering a simple method of installing tubes within, e.g., fiber optic cabinets or other enclosures.

While some of the illustrated and described embodiments focus on use of various embodiments in base structures within enclosures, any type of enclosure or base structure is contemplated for use with various embodiments. For example, the disclosed systems and assemblies may be employed in many different fiber optic management scenarios, such as in optical fiber distribution hub cabinets, multi-dwelling unit cabinets, front-end and/or back-end cabinets, closures, or other terminals. In some embodiments, various concepts and designs may be easily adjusted for any communications equipment, such as for use within racks, among other communications equipment.

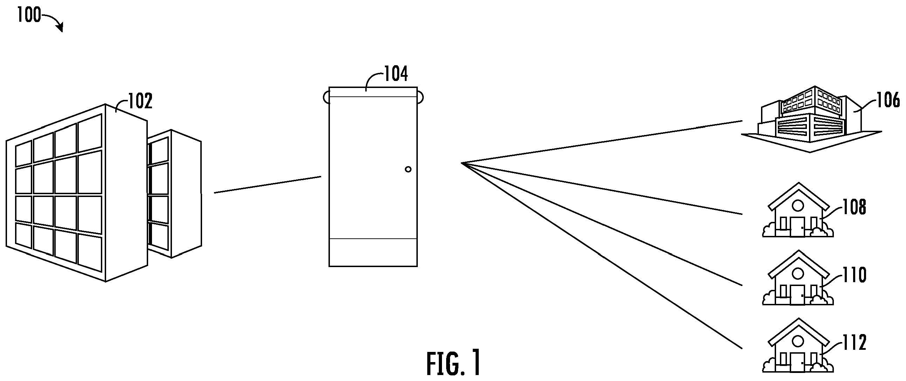

Passive optical networks (PONs), such as fiber to the promise (FTTP), fiber to the business (FTTB) and fiber to the home (FTTH) are used to deliver broadband network access to end users for practical applications such as video conferencing, telephone calls, and online streaming. FIG. 1 illustrates an example communication network 100 that includes an optical fiber distribution cabinet 104. The communication network 100 is used, for example, to deliver broadband network access to end users, such as homes 108, 110, 112 and businesses 106, for various applications and services. The communication network 100 may employ various architectures and technologies to efficiently distribute data and signals to the end users. The communication network 100 may also include the data center/headend 102, which serves as the central point for generating, processing, and distributing data and signals. The data center/headend 102 houses equipment, such as optical line terminals (OLTs), that convert electrical signals to optical signals and vice versa. From the data center/headend 102, optical signals are transmitted through a network of optical fibers or cables to reach the end users.

The optical fibers or cables, which may be bundled together in protective tubes or conduits, carry the optical signals over long distances with minimal loss and interference. These cables are strategically routed through the communication network 100 to ensure efficient and reliable data transmission. Along the way, the optical fiber or cable may pass through various network components and connection points, one of which may be the optical fiber distribution cabinet 104.

The optical fiber distribution cabinet 104 may serve as an intermediary point between the data center/headend 102 and the end users (e.g., homes 108, 110, 112 and businesses 106). It is typically located in the field, closer to the end users, and acts as a centralized hub for organizing, splitting, and distributing the optical fibers or cables. The optical fiber distribution cabinet 104 provides a secure and protected environment for the optical fiber or cable components, shielding them from external factors such as weather, dust, and physical damage. Inside the optical fiber distribution cabinet 104, the incoming optical fiber or cable, which may be housed within a tube, are carefully managed and organized. The cables are often split into smaller bundles or individual optical fibers, each for a specific group of end users or network branch. This splitting and organization process ensures that the optical fiber or cable signals are efficiently distributed to the intended recipients while maintaining signal integrity.

The optical fibers or cables may be installed in the communication network 100 using various methods, depending on factors such as distance, terrain, and available infrastructure. Two common methods for installing optical fibers or cables are pulling and blowing. Both methods typically involve the use of tubes, which are pre-installed pathways that provide a protective organized route for the optical fibers or cables. The tubes are often installed underground, either by trenching or directional drilling, or they may be attached to utility poles or other overhead structures. Once the tubes are in place, they serve as ready pathways for the optical fibers or cables to be installed using either the pulling or blowing methods.

The pulling method involves attaching the optical fiber or cable to a pre-installed pull tape or rope, which is then used to manually or mechanically draw the optical fiber or cable through a tube. This method is suitable for shorter distances and straight runs, as the pulling process can cause friction and stress on the optical fiber or cable, potentially leading to damage.

On the other hand, the blowing method, also known as jetting, uses compressed air to push the optical fiber or cable through the tube. A special machine is used to generate the high-pressure air flow, which floats the optical fiber or cable through the tube with minimal friction. Blowing optical fiber or cable is ideal for longer distances, as it reduces the risk of damage on the optical fiber or cable and allows for faster installation speeds. It is also suitable for tubes with bends or elevation changes, as the air flow helps guide the optical fiber or cable through these obstacles.

In the communication network 100, both pulling and blowing methods may be employed to install the optical fibers or cables, depending on the specific requirements of each segment. For example, pulling may be used for shorter runs between the optical fiber distribution cabinet 104 and nearby end users, while blowing may be used for longer runs between the data center/headend 102 and the optical fiber distribution cabinet 104.

It is important to note that the communication network 100 shown in FIG. 1 is a simplified representation, and actual networks may have more complex topologies and additional components, such as splitters, amplifiers, and network interface devices. However, the basic principles of distributing data and signals from the data center/headend 102 to the end users (e.g., homes 108, 110, 112 and businesses 106), with the optical fiber distribution cabinet 104 serving as a key connection point, remain the same.

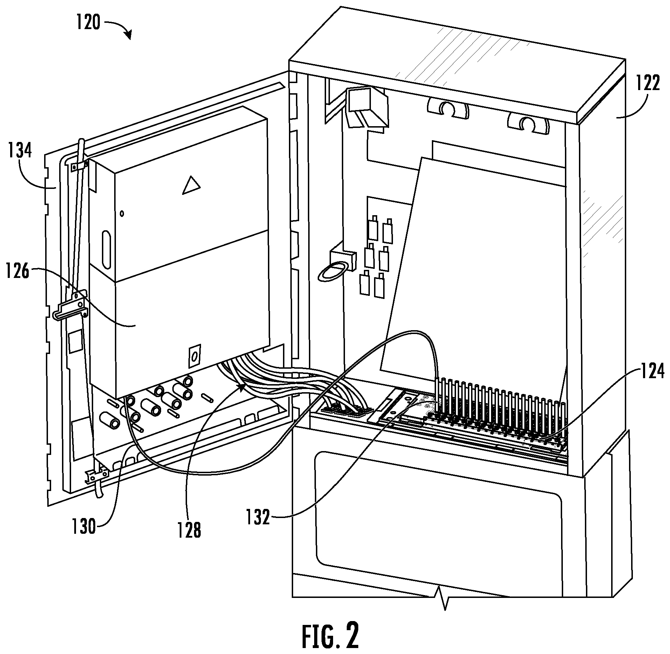

FIG. 2 illustrates the example optical fiber distribution cabinet 104 from the communication network 100 with its cabinet door 109 in an open position. The optical fiber distribution cabinet 104 is typically positioned in the field, such as in close proximity to the end users' premises (businesses, homes, etc.), and serves as an intermediary point between the data center/headend 102 and the end users. The primary function of the optical fiber distribution cabinet 104 is to facilitate the organization, protection, and distribution of optical fibers or cables, ensuring reliable communication services for customers. The optical fiber distribution cabinet 104 is constructed to withstand a variety of environmental conditions, as it is commonly installed outdoors or in remote locations. The cabinet's design protects the communication network components and the cable or the optical fiber housed within it from factors such as moisture, dust, and temperature fluctuations. In various embodiments, the optical fiber distribution cabinet 104 may be pole-mounted, pad-mounted, or installed in underground vaults, depending on the specific requirements of the deployment site and the network architecture. The size and configuration of the optical fiber distribution cabinet 104 may vary based on the number of end users it serves and the capacity of the network. Some cabinets may be compact, accommodating a smaller number of customers, while others may be larger, housing hundreds or even thousands of optical fibers or cables to meet the demands of more extensive networks. The modular design of the optical fiber distribution cabinet 104 enables scalability and flexibility, allowing network operators to easily expand or modify the cabinet as needed.

As illustrated, the example optical fiber distribution cabinet 104 features a top section 128, side portions 132, and a lower section 134. The top section 128 provides additional room for cable management and organization. This area can, for example, accommodate extra cable slack, splice enclosures, and/or passive components like splitters or couplers. The top section 128 helps maintain an organized appearance within the cabinet while offering flexibility for future network expansions or reconfigurations and also provides protection of the interior components. The cabinet 102 also features side portions 132 that may also protect the interior components and provide structural integrity. These side portions may be made of materials, such as steel or aluminum, to withstand environmental challenges and prevent unauthorized access. The side portions 132 also contribute to the overall rigidity and stability of the optical fiber distribution cabinet 104. The lower section 134 of the optical fiber distribution cabinet 104 offers convenient access to the tubes 106 and other components, such as the incoming distribution cable(s)/optical fiber(s) 108, such as for maintenance or installation. The tubes 106 comprise an outer wall that surrounds an inner hollow opening and are pre-installed and run underground from the optical fiber distribution cabinet 104 to the end users' premises, providing a protective conduit for the cable or optical fibers 112 that will be installed within them. This lower section 134 can be easily opened, allowing technicians to install, maintain, or troubleshoot the tubes 106 and/or other components contained therein. The lower section 134 may include features like cable glands, grommets, or sealing mechanisms to prevent moisture, dust, or pests from entering the cabinet.

Within the optical fiber distribution cabinet 104, there is a back panel 130. This back panel 130 may serve as a mounting surface for various components, such as cable management hardware, equipment brackets, or grounding bars. The back panel 130 may be composed of durable material, capable of withstanding the weight and stress of the mounted components and may be designed to allow for easy customization and adaptation to different network requirements. Also featured within the optical fiber distribution cabinet 104 is a system 140 positioned at the bottom of an upper chamber 131 of the optical fiber distribution cabinet 104 to manage, secure, and/or seal a tube or multiple tubes 106 that enter the optical fiber distribution cabinet 104 from the ground. These tubes 106, as mentioned, comprise an outer wall that surrounds an inner hollow opening and are pre-installed and run underground from the optical fiber distribution cabinet 104 to the end users' premises, providing a protective conduit for the cable or optical fibers 112 that will be installed within them.

The system 140 ensures that the tubes 106 are properly organized and secured as they enter the cabinet, reducing the risk of damage or disruption to the cables or optical fibers 112 during installation and operation. The system 140 is capable of accommodating a variable number of tubes 106, depending on the specific requirements of the network and the optical fiber distribution cabinet 104. In conventional optical fiber distribution cabinets, technicians often need to individually fasten and secure each tube entering the cabinet, which can be time-consuming and labor-intensive process. The system 140 enables the technician to install and secure multiple tubes 106 in a single operation. In some embodiments, the system 140 may be configured to manage a single row of tubes 106, while in others, it may accommodate multiple columns and/or rows or even a matrix of tubes. The arrangement of the tubes 106 within the system 140 can be optimized to maximize space utilization and minimize the potential for congestion or entanglement. The system 140 enables users to efficiently organize and install multiple tubes 106 simultaneously.

Positioned above the system 140, the cable/optical fiber management panel 110 is mounted on the inside of the optical fiber distribution cabinet door 109. This panel 110 functions as the main termination and connection point for the cables or optical fibers 112 that will be fed into the tubes 106. The cable/optical fiber management panel 110 offers an organized space for technicians to splice and connect the incoming optical fibers or cables from the distribution cable(s)/optical fiber(s) 108 that will be routed to specific end users.

The distribution cable(s)/optical fiber(s) 108, which carries the cable or optical fiber from the data center/headend 102, enters the optical fiber distribution cabinet 104 through a dedicated cable port or opening 114. Inside the cabinet, the distribution cable(s)/optical fiber(s) 108 is managed and routed to the cable/optical fiber management panel 110 via an opening 116 at the bottom of the cable/optical fiber management panel 110. The cable/optical fiber management panel 110 includes a handle 124 allowing technicians to easily grasp, open, or close the cable/optical fiber management panel 110 during installation and maintenance activities. The cable/optical fiber management panel 110 is also divided into two distinct sections as illustrated to include: a bottom portion 122 and a top portion 126. The bottom portion 122 may be dedicated to handling the distribution cable(s)/optical fiber(s) 108, providing space for splicing, organizing, and routing tasks. Technicians can access this area to perform initial cable preparation, such as stripping, cleaning, and fusion splicing. The bottom portion 122 may also include features like splice trays, cable guides, and strain relief mechanisms to ensure the proper handling and protection of the distribution cable(s)/optical fiber(s) 108.

On the other hand, the top portion 126 of the cable/optical fiber management panel 110 may focus on managing the individual cables or optical fibers 112 that will be connected to the end users. This portion may provide an organized environment for routing and terminating the cables or optical fibers 112. The top portion 126 may include features such as adapters, connector panels, and labeling provisions to facilitate easy identification and connectivity. An opening 120 located at the bottom of the optical fiber management panel 110, allows the terminated cables or optical fibers 112 to exit the panel 110 and deliver to their corresponding tubes 106.

Delivering the individual cable or optical fiber 112 to the end users involves carefully matching the cable or optical fiber 112 to a corresponding residence location of the end user. As described in relation to FIG. 1, technicians use specialized blowing or pulling equipment to efficiently feed the cables or optical fibers 112 through the tubes 106, wherein the tubes 106 extend from the optical fiber distribution cabinet 104 to a residence of the end user (a business or home) where the connection process is complete. Each cable or optical fiber 112 is carefully guided into its designated tube 106, ensuring a secure and organized path from the cabinet 102 to the customer. In some embodiments, the optical fiber distribution cabinet 104 may accommodate multiple distribution cable(s)/optical fiber(s) 108, each containing a large number of cables or optical fibers. These distribution cable(s)/optical fiber(s) 108 are used to transmit data and signals from the data center/headend 102 to the optical fiber distribution cabinet 104, where they are then split and distributed to individual end users through the tubes 106. The optical fiber management panel 110 provides a structured and organized environment for managing the splicing and connection of the cables or optical fibers that will be routed to end users.

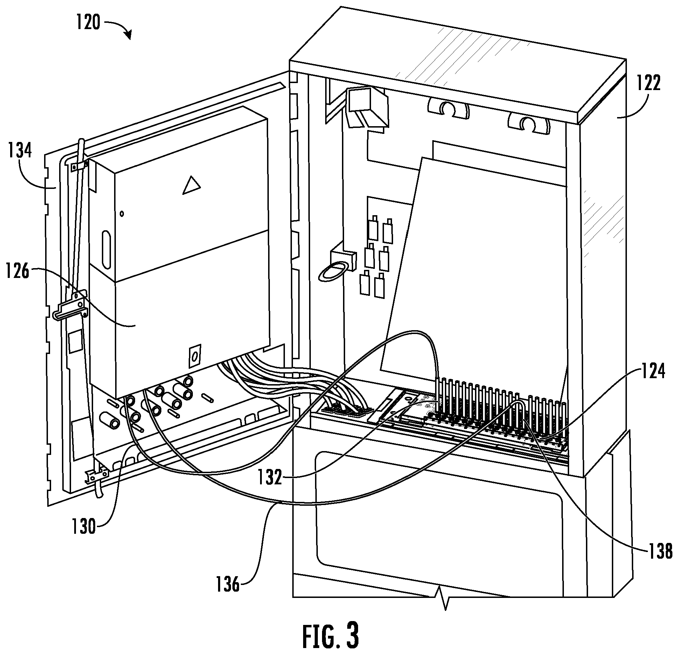

FIG. 3 shows the optical fiber distribution cabinet 104 as shown in FIG. 2 with greater detail and more examples illustrating the interaction between the tubes 106 and the cables or optical fibers 112. The system 140, as shown, allows for the tubes 106 to be bent at an angle, such as up and, in some embodiments, past 90 degrees, depending on the specific installation requirements. The bending capability of the tubes 106, facilitated by the system 140, is an advantage when it comes to the ease of installation, particularly in scenarios involving multiple tubes 106. In current configurations, where tubes are rigidly secured or lack the ability to bend, the process of inserting the cables or optical fibers 112 into the tubes 106 can be challenging and time-consuming, especially when dealing with a large number of tubes 106.

The ability to bend the tubes 106 allows for better access and visibility when inserting the cables or optical fibers 112. In a typical optical fiber distribution cabinet 104, there may be numerous tubes 106 arranged in close proximity to each other. When the tubes 106 are rigid and cannot be bent, making it difficult for technicians to accurately guide the cables or optical fibers 112 into the desired tube 106, particularly when working in tight spaces or with limited visibility. By allowing the tubes 106 to bend, the system 140 enables technicians to position the tubes 106 in a way that provides clear access to the tube openings, making it easier to feed the cables or optical fibers 112 into the correct tubes 106. Further, the ability to bend the tubes 106 significantly reduces the time and effort required for cable or optical fiber installation, particularly when dealing with a large number of tubes 106.

In a scenario where multiple cables or optical fibers 112 need to be installed across numerous tubes 106, the ability to bend the tubes 106 allows technicians to work efficiently. They can quickly and easily access each tube 106, insert the corresponding cable or optical fiber 112, and move on to the next tube 106 without the need for complex maneuvering or the risk of inadvertently inserting the cable or optical fiber 112 into the wrong tube 106. The bending capability of the tubes 106 allows for greater flexibility in the routing and organization of the tubes 106 within the optical fiber distribution cabinet 104. In some cases, the tubes 106 may need to be routed around obstacles or directed towards specific components within the cabinet 102. The ability to bend the tubes 106 at various angles enables technicians to create clean and organized cable or optical fiber management pathways, reducing clutter and improving the overall functionality of the optical fiber distribution cabinet 104.

In addition to the ease of installation, the bending capability of the tubes 106 also facilitates maintenance and troubleshooting activities. In the event that a cable or optical fiber 112 needs to be replaced or a tube 106 needs to be accessed for repair, the ability to bend the tubes 106 allows technicians to easily locate and manipulate the specific tube 106 and optical fiber 112 without disturbing the surrounding components.

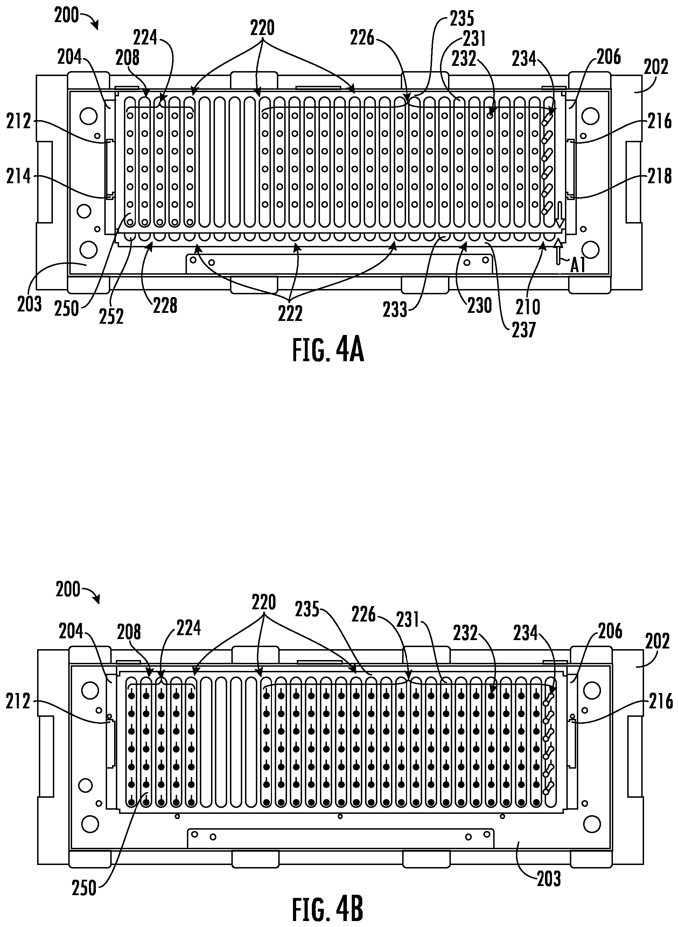

FIGs. 4A-4B illustrate an example system 200 for securing a plurality of tubes 234. In some embodiments, the system 200 may be installed within an enclosure such as the fiber optic cabinet 104 shown in FIG. 1. In other embodiments, the system 200 may be installed in any other environment. In some embodiments, each of the plurality of tubes 234 include an outer wall surrounding an inner hollow opening configured to contain at least one of a cable or an optical fiber 112 therethrough. Such cable or optical fiber 112 may be installed through the tube via a technique such as pulling or blowing, as described herein. The system 200 includes a base 202 that may be made of metal. A purpose of the base may be to secure the system 200 within the fiber optic cabinet 104 or other enclosure and/or to provide added support to the elements of the system 200. It should be appreciated that the base 202 may be optional.

The system 200 also includes a first sealing element 208. A purpose of the first sealing element 208 may be to secure and/or seal the plurality of tubes 234 within the system 200 to provide stability and protection from dust, among other things. The first sealing element 208 includes a first foam element 231 that includes a first plurality of holes 232. The first foam element 231 of the first sealing element 208 has a first surface 250 and an opposing second surface 260. A purpose of the first foam element 231 that includes the first plurality of holes 232 may be to receive the plurality of tubes 234 in a way that is not cumbersome (e.g., due to the diameters of the holes) and to secure and/or seal the plurality of tubes 234 in a way that does not cause damage to the plurality of tubes 234.

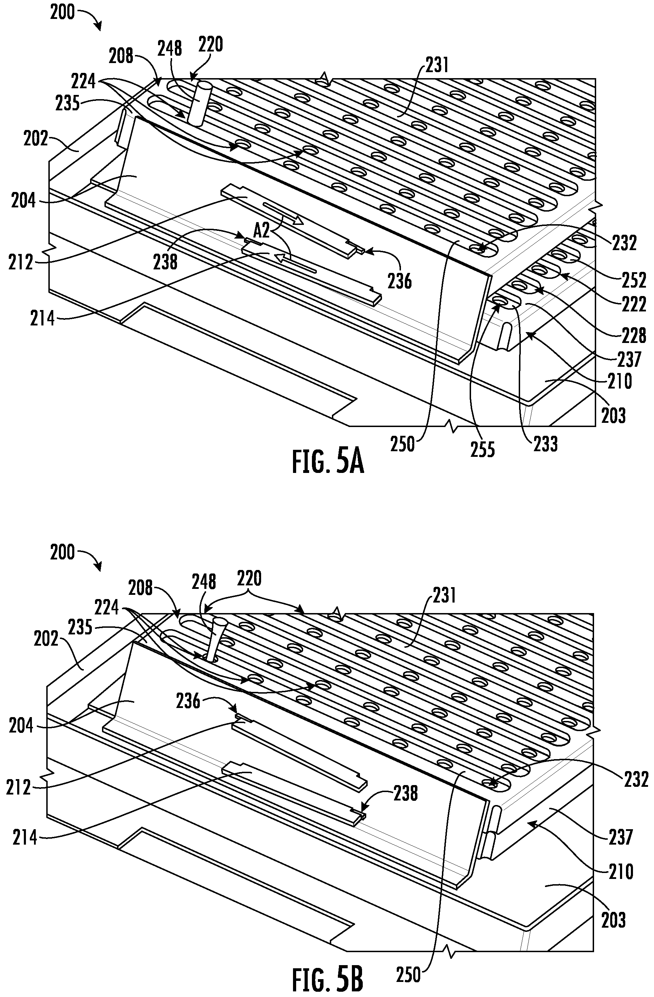

The system also includes a second sealing element 210. A purpose of the second sealing element 210 may be to secure and/or seal the plurality of tubes 234 within the system 200 to provide stability and protection from dust, among other things. The second sealing element 210 includes a second foam element 233 that includes a second plurality of holes 255 (shown in FIG. 5A). The second foam element 233 of the second sealing element 210 has a first surface 252 and an opposing second surface 261. A purpose of the second foam element 233 that includes the second plurality of holes 255 may be to receive the plurality of tubes 234 in a way that is not cumbersome (e.g., due to the diameters of the holes) and to secure and/or seal the plurality of tubes 234 in a way that does not cause damage to the plurality of tubes 234.

The first surface 252 of the second foam element 233 is positioned below the second surface 260 of the first foam element 231, and in some embodiments, the first surface 252 of the second foam element 233 may be parallel with the second surface 260 of the first foam element 231. Further, the base includes a first surface 203 that is positioned adjacent the second surface 261 of the second foam element 233. The first plurality of holes 232 each extend through the first foam element 231 from the first surface 250 to the second surface 260, and the second plurality of holes 255 each extend through the second foam element 233 from the first surface 252 to the second surface 261.

A purpose of the first sealing element 208 and the second sealing element 210, each having a foam element that includes pluralities of holes 232, 255, may be to provide a way for the plurality of tubes 234 to be secured and/or sealed within the system 200 without having to be cumbersomely pulled through individual holes and/or having to be individually connected. That is, the arrangement of the first sealing element 208 being on top of the second sealing element 210 allows for an alignment of the first plurality of holes 232 and the second plurality of holes 255 when the first sealing element 208 and the second sealing element 210 are in an unlocked position. The arrangement also allows for the first sealing element 208 and the second sealing element 210 to be shifted or otherwise moved, such that the first plurality of holes 232 and the second plurality of holes 255 are no longer aligned when the first sealing element 208 and the second sealing element 210 are in a locked position. This causes all of the plurality of tubes 234 to be secured and/or sealed in one singular operation (e.g., when the first sealing element 208 and the second sealing element 210 are moved from the unlocked position to the locked position), which is an improvement from the current technology, which requires pushing each individual tube of the plurality of tubes 234 through holes of the pluralities of holes 232, 255 with a smaller diameter than the tube of the plurality of tubes 234 and then individually securing each tube of the plurality of tubes 234 with a zip tie or other mechanism.

In the embodiment shown, the first sealing element 208 includes a first frame 235. A purpose of the first frame 235 may be to provide support to the first foam element 231. The first frame 235 may be, e.g., metal. It should be appreciated that the first frame 235 is optional, and that in some embodiments, the first sealing element 208 may not include the first frame 235.

The first frame 235 includes a first plurality of slots 220 that support the first foam element 231. The first plurality of holes 232 are arranged within the first foam element 231 such that the first plurality of holes 232 are aligned within certain ones of the first plurality of slots 220 of the first frame 235. The first plurality of slots 220 may serve to support and to provide added stability to certain columns of the first plurality of holes 232. The first foam element 231 may be one large piece of foam integrated within the first frame 235 such that the first foam element 231 spreads across the first plurality of slots 220, or the first foam element 231 may be multiple different pieces of foam embedded (or otherwise installed) within the first plurality of slots 220.

In some embodiments, the first plurality of holes 232 are arranged in a first series of columns so as to create a first matrix of holes. In some further embodiments, such as the one shown, the first matrix of holes includes a first set of input holes 224 and a first set of output holes 226. It should be appreciated, however, that input holes and output holes may be mixed together in some embodiments, or in other embodiments, a system may include all input holes or all output holes. Holes that each accommodate both input and output holes are also contemplated within the scope of this disclosure.

The second sealing element 210 includes a second frame 237. A purpose of the second frame 237 may be to provide support to the second foam element 233. The first second frame 237 may be, e.g., metal. It should be appreciated that the second frame 237 is optional, and that in some embodiments, the second sealing element 210 may not include the second frame 237.

The second frame 237 includes a second plurality of slots 222 that support the second foam element 233. The second plurality of holes 255 are arranged within the second foam element 233 such that the second plurality of holes 255 are aligned within certain ones of the second plurality of slots 222 of the second frame 237. The second plurality of slots 222 may serve to support and to provide added stability to certain columns of the second plurality of holes 255. The second foam element 233 may comprise one large piece of foam integrated within the second frame 237 such that the second foam element 231 spreads across the second plurality of slots 222, or the second foam element 233 may comprise multiple different pieces of foam embedded (or otherwise installed) within the second plurality of slots 222.

In some embodiments, the second plurality of holes 255 are arranged in a second series of columns so as to create a second matrix of holes. In some further embodiments, such as the one shown, the second matrix of holes includes a second set of input holes 228 and a second set of output holes 230. It should be appreciated, however, that input holes and output holes may be mixed together in some embodiments, or in other embodiments, a system may include all input holes or all output holes. Holes that each accommodate both input and output holes are also contemplated within the scope of this disclosure.

The first sealing element 208 and the second sealing element 210 are shown in the unlocked position in FIG. 4A and are shown in the locked position in FIG. 4B. In the unlocked position, the plurality of tubes 234 can be received through the first plurality of holes 232 and the second plurality of holes 255. Similarly, in the locked position, the plurality of tubes 234 can be secured and/or sealed within first plurality of holes 232 and the second plurality of holes 255 of the system 200. The first sealing element 208 and the second sealing element 210 may be movable relative to each other between the unlocked position and the locked position in various different ways. For example, in the embodiment shown, both of the first sealing element 208 and the second sealing element 210 are movable from the unlocked position to the locked position by sliding inwards along arrows A1 (and/or arrows A2 in FIG. 5A). In the unlocked position, the first sealing element 208 and the second sealing element 210 are aligned such that the corresponding first plurality of holes 232 and second plurality of holes 255 are aligned. This alignment enables insertion or removal of the plurality of tubes 234 in corresponding aligned holes of the first foam element 231 and the second foam element 233. When the first sealing element 208 and the second sealing element 210 are moved to the locked position, the first sealing element 208 and the second sealing element 210 are displaced relative to each other along arrows A1 such that the first foam element 231 and the second foam element 233 apply compressive forces on outer walls of the plurality of tubes 234 inserted therethrough to secure the plurality of tubes 234 therein. For example, in some embodiments, the compressive forces may be distributed evenly on the outer walls of the plurality of tubes 234. The system 200 may thus be configured to prevent the plurality of tubes 234 from being bent, curved, or deformed beyond a predetermined threshold when the plurality of tubes 234 is secured by the first sealing element 208 and/or the second sealing element 210 being moved to the locked position.

Each of the first plurality of holes 232 and the second plurality of holes 255 have a diameter that is equal to or larger than the outer diameter of each the plurality of tubes 234 when the first sealing element 208 and/or the second sealing element 210 are in the unlocked position. In this way, the plurality of tubes 234 are easily and quickly threaded into the first plurality of holes 232 and the second plurality of holes 255 when the first sealing element 208 and/or the second sealing element 210 are in the unlocked position, while still allowing for a tight seal to be achieved when the first sealing element 208 and/or the second sealing element 210 are moved to the locked position. This is an improvement to previous techniques which require an installer to thread the plurality of tubes 234 through the pluralities of holes 232, 255 having diameters that are equal to or smaller than the diameters of the plurality of tubes 234.

It should be appreciated that, although the first sealing element 208 and the second sealing element 210 are shown as both moving inwards when the system 200 transitions from the unlocked position to the locked position, that other configurations are also contemplated. For example, in other embodiments, one of the first sealing element 208 or the second sealing element 210 may remain stationary during the transition from the unlocked position to the locked position while the other of the first sealing element 208 or the second sealing element 210 moves inwards (or outwards).

In either case, the unlocked position comprises an alignment of the first plurality of holes 232 and the second plurality of holes 255, and the locked position comprises an intentional misalignment of the first plurality of holes 232 and the second plurality of holes 255 such that an appropriate tension and/or seal around each of the plurality of tubes 234 is achieved. This allows for the appropriate tension and/or seal to be achieved without having the first plurality of holes 232 and the second plurality of holes 255 have smaller diameters than the outside diameters of the plurality of tubes 234, which is difficult and time consuming for an installer because of the limited clearance between the outer diameter of the tube and the diameter of the holes.

It should be appreciated that, although the embodiment shown in FIGs. 4A-4B demonstrates a plurality of tubes 234 being secured by the first sealing element 208 and the second sealing element 210 via the system 200, in other embodiments, more or less tubes 234 may be secured. For example, as shown in FIGs. 5A-5B, only one tube 248 is secured by the system 200. Other configurations are also contemplated within the scope of this disclosure.

FIGs. 5A-5B show a perspective side view of the system 200. As shown, the system 200 also includes a side rail 204 adjacent to the first sealing element 208 and the second sealing element 210. The side rail 204 includes a first guide slot 236 configured to receive a first tab 212 of the first sealing element 208. The first tab 212 is smaller than the first guide slot 236 such that the first tab 212 can slide between the unlocked position and the locked position along the first guide slot 236 (e.g., see arrows A2 and the transition from FIG. 5A to FIG. 5B). The first tab 212 is configured to make it easy for the installer to transition the first sealing element 208 from the unlocked position to the locked position. The first tab 212 extends from or is attached to the first sealing element 208, and the first tab 212 is disposed at least partially within the first guide slot 236. That is, the first tab 212 is integrally formed with the first sealing element 208 or coupled to the first sealing element 208.

The side rail 204 also includes a second guide slot 238 configured to receive a second tab 214 of the second sealing element 210. The second tab 214 is smaller than the second guide slot 238 such that the second tab 214 can slide between the unlocked position and the locked position along the second guide slot 238 (e.g., see arrows A2 and the transition from FIG. 5A to FIG. 5B). The second tab 214 is configured to make it easy for the installer to transition the second sealing element 210 from the unlocked position to the locked position. The second tab 214 extends from or is attached to the second sealing element 210, and the second tab 214 is disposed at least partially within the second guide slot 238. That is, the second tab 214 is integrally formed with the second sealing element 210 or coupled to the second sealing element 210.

As explained above, it should be appreciated that, in some embodiments, one of the first sealing element 208 or the second sealing element 210 may remain stationary during the transition from the unlocked position to the locked position while the other of the first sealing element 208 or the second sealing element 210 moves inwards (or outwards). Therefore, the side rail 204 may have one guide slot, and one of the first sealing element 208 or the second sealing element 210 may have a corresponding tab that is configured to move within that corresponding guide slot. Alternatively, the side rail 204 may have both the first guide slot 236 and the second guide slot 238, and the first sealing element 208 and the second sealing element 210 may have the first tab 212 and the second tab 214, respectively, while one of the first sealing element 208 or the second sealing element 210 remains stationary during the transition from the unlocked position to the locked position. Other configurations are also contemplated within the scope of this disclosure.

Although not shown in FIGs. 5A-5B, in some embodiments, the system 200 has a second side rail 206 disposed on a side of the first sealing element 208 and the second sealing element that is opposite the side rail 204. Such second side rail 206 is configured similarly to the side rail 204. That is, as shown in FIG. 4A, the second side rail 206 is configured to receive (via first and second guide slots, which are not shown) a first tab 216 that is integrally formed with or coupled to the first sealing element 208 and a second tab 218 that is integrally formed with or coupled to the second sealing element 210. In other embodiments, the system 200 may not have the side rail 206, the first tab 216, and/or the second tab 218. Further, one or more of the side rail 204, first guide slot 236, second guide slot 238, first tab 212, and/or second tab 214 (and/or the second side rail 206) may not be included at all, and a different mechanism may be used to accomplish the displacement of the first sealing element 208 and the second sealing element 210 from the unlocked to the locked position to accomplish the desired compressive force around the tube 248 in the locked position.

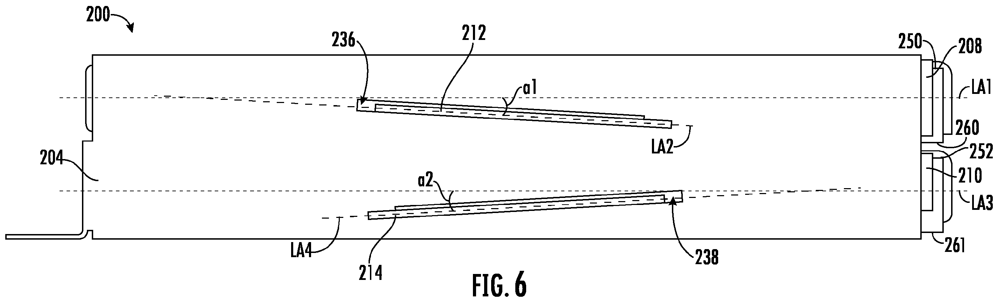

Referring now to FIG. 6, the first tab 212 has a longitudinal axis LA2 that forms an angle a1 with a longitudinal axis LA1 of the first sealing element 208. In some embodiments, the angle a1 is a non-zero angle, as shown in FIG. 6, while in other embodiments, the angle a1 is zero (with respect to longitudinal axis LA1). Further, the longitudinal axis LA2 may be angled in either direction. While the angling of longitudinal axis LA2 is optional, a purpose of the angling, in at least some embodiments, may be to cause the first foam element 231 to move and/or squeeze closer to the second foam element 233 when the first sealing element 208 and the second sealing element 210 are moved from the unlocked position to the locked position such that a tube (such as the tube 248 in FIGs. 5A-5B) is secured and/or sealed by the first foam element 231 and the second foam element 233 when the first sealing element 208 and the second sealing element 210 are moved from the unlocked position to the locked position. That is, the angling of longitudinal axis LA2 is configured such that a distance between the first surface 252 of the second foam element 233 and the second surface 260 of the first foam element 231 decreases when the first sealing element 208 and the second sealing element 210 are moved from the unlocked position to the locked position.

Similarly, the second tab 214 has a longitudinal axis LA4 that forms an angle a2 with a longitudinal axis LA3 of the second sealing element 210. In some embodiments, the angle a2 is a non-zero angle, as shown in FIG. 6, while in other embodiments, the angle a2 is zero (with respect to longitudinal axis LA3). Further, the longitudinal axis LA4 may be angled in either direction. While the angling of longitudinal axis LA4 is optional, a purpose of the angling, in at least some embodiments, may be to cause the second foam element 233 to move and/or squeeze closer to the first foam element 231 when the first sealing element 208 and the second sealing element 210 are moved from the unlocked position to the locked position such that a tube (such as the tube 248 in FIGs. 5A-5B) is secured and/or sealed by the first foam element 231 and the second foam element 233 when the first sealing element 208 and the second sealing element 210 are moved from the unlocked position to the locked position. That is, the angling of longitudinal axis LA4 is configured such that a distance between the first surface 252 of the second foam element 233 and the second surface 260 of the first foam element 231 decreases when the first sealing element 208 and the second sealing element 210 are moved from the unlocked position to the locked position.

Alternatively, in some other embodiments, although not shown, the first tab 212 may have a longitudinal axis that is parallel with a longitudinal axis of the first sealing element 208, and the second tab 214 may have a longitudinal axis that is parallel with a longitudinal axis of the second sealing element 210. A tube is still securable and/or sealable within the first foam element 231 and the second foam element 233 when the first sealing element 208 and the second sealing element 210 are moved from the unlocked position to the locked position because of the above-described intentional misalignment of the first plurality of holes 232 and the second plurality of holes 255 when the first sealing element 208 and the second sealing element 210 are in the locked position. Further, in embodiments in which only one of the first sealing element 208 or the second sealing element 210 are movable, the one of the first sealing element 208 or the second sealing element 210 that is movable may or may not have a tab with a longitudinal axis that is angled.

### Example Flowchart(s)

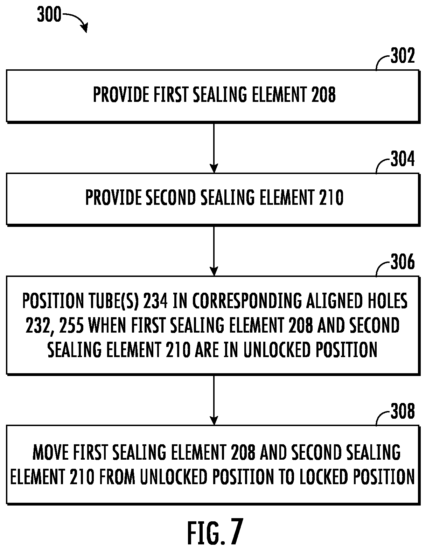

Embodiments of the present disclosure provide various methods for securing a tube within an enclosure, such as described herein. Various examples of the operations performed in accordance with some embodiments of the present disclosure will now be provided with reference to FIG. 7. Unless otherwise expressly stated, it is not intended that any method set forth herein be construed as requiring that its steps be performed in a specific order.

FIG. 7 illustrates a flowchart according to an example method 300 of securing one or more of the plurality of tubes 234 within an enclosure. The method 300 includes providing the first sealing element 208 at operation 302. The first sealing element 208 includes the first foam element 231 with the first surface 250 and the opposing second surface 260, and the first sealing element 208 has the first plurality of holes 232 that each extend through the first foam element 208 from the first surface 250 to the second surface 260. The method 300 also includes providing the second sealing element 210 at operation 304. The second sealing element 210 includes the second foam element 233 with the first surface 252 and the opposing second surface 261, and the first surface 252 of the second foam element 233 is positioned below the second surface 260 of the first foam element 231. The second sealing element 210 has the second plurality of holes 255 that each extend through the second foam element 210 from the first surface 252 to the second surface 261. At operation 306, the method 300 includes positioning the one or more of the plurality of tubes 234 in corresponding aligned holes of the first foam element 231 and the second foam element 233 when the first sealing element 208 and the second sealing element 210 are in an unlocked position. At least one of the first sealing element 208 or the second sealing element 210 is movable relative to the other of the first sealing element 208 or the second sealing element 210 between the unlocked position and a locked position. At operation 308, the method 300 includes moving the first sealing element 208 and/or the second sealing element 210 to the locked position, displacing the first plurality of holes 232 of the first sealing element 208 from the second plurality of holes 255 of the second sealing element 210 such that the first foam element 208 and the second foam element 210 apply a compressive force on an outer wall of the one or more of the plurality of tubes 234 inserted therethrough to secure the one or more of the plurality of tubes 234 therein. The method 300 may also include other operations.

### Conclusion

Many modifications and other embodiments of the disclosures set forth herein will come to mind to one skilled in the art to which these present disclosures pertain having the benefit of the teachings presented in the foregoing descriptions and the associated drawings. Therefore, it is to be understood that the embodiments of the present disclosure are not to be limited to the specific embodiments disclosed and that modifications and other embodiments are intended to be included within the scope of the present disclosure. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the present disclosure. In this regard, for example, different combinations of elements and/or functions than those explicitly described above are also contemplated within the scope of the present disclosure. Although specific terms are employed herein, they are used in a generic and descriptive sense only and not for purposes of limitation.

## Claims

1. A system for securing at least one tube within an enclosure, wherein the at least one tube comprises an outer wall surrounding an inner hollow opening configured to contain at least one of a cable or an optical fiber therethrough, the system comprising:
a first sealing element comprising a first foam element with a first surface and an opposing second surface, wherein the first sealing element comprises a first plurality of holes that each extend through the first foam element from the first surface to the second surface; and
a second sealing element comprising a second foam element with a first surface and an opposing second surface, wherein the first surface of the second foam element is positioned below the second surface of the first foam element, wherein the second sealing element comprises a second plurality of holes that each extend through the second foam element from the first surface to the second surface,
wherein at least one of the first sealing element or the second sealing element is movable relative to an other of the first sealing element or the second sealing element between an unlocked position and a locked position,
wherein, when in the unlocked position, the first plurality of holes and the second plurality of holes are aligned to enable insertion or removal of the at least one tube in corresponding aligned holes of the first foam element and the second foam element,
wherein, when in the locked position, the at least one of the first sealing element or the second sealing element is displaced relative to the other of the first sealing element or the second sealing element such that the first foam element and the second foam element apply a compressive force on an outer wall of the at least one tube inserted therethrough to secure the at least one tube therein.

2. The system of claim 1, wherein the first sealing element comprises a first frame that further comprises one or more first slots that support the first foam element, and wherein the second sealing element comprises a second frame that further comprises one or more second slots that support the second foam element.

3. The system of any one of claims 1-2, wherein the system further includes a base comprising a first surface, and wherein the first surface of the base is positioned adjacent to the second surface of the second foam element.

4. The system of any one of claims 1-3, wherein the system further comprises at least one side rail adjacent to each of the first sealing element and the second sealing element, the at least one side rail comprising at least one guide slot configured to receive at least one tab of at least one of the first sealing element or the second sealing element.

5. The system of claim 4, wherein the at least one tab extends from or is attached to at least one of the first sealing element or the second sealing element, wherein the at least one tab is disposed at least partially within the at least one guide slot, and wherein the at least one tab is smaller than the at least one guide slot such that the at least one tab is able to slide between the unlocked position and the locked position along the at least one guide slot.

6. The system of claim 5, wherein the at least one tab comprises a first longitudinal axis that forms a non-zero angle with a second longitudinal axis of the at least one of the first sealing element or the second sealing element.

7. The system of claim 5 or claim 6, wherein the at least one guide slot is a first guide slot and a second guide slot, wherein the at least one tab is a first tab and a second tab, wherein the first tab extends from or is attached to the first sealing element, wherein the first tab is disposed at least partially within the first guide slot, wherein the second tab extends from or is attached to the second sealing element, and wherein the second tab is disposed at least partially within the second guide slot.

8. The system of claim 7, wherein the first tab comprises a first longitudinal axis that forms a first non-zero angle with a second longitudinal axis of the first sealing element, and wherein the second tab comprises a third longitudinal axis that forms a second non-zero angle with a fourth longitudinal axis of the second sealing element.

9. The system of any one of claims 1-8, wherein each of the first plurality of holes and the second plurality of holes comprises a diameter that is larger than the outer diameter of the at least one tube when the at least one of the first sealing element or the second sealing element is in the unlocked position.

10. The system of any one of claims 1-9, wherein the first surface of the second foam element is parallel with the second surface of the first foam element.

11. The system of any one of claims 1-10, wherein each of the first sealing element and the second sealing element are movable relative to the other of the first sealing element or the second sealing element between the unlocked position and the locked position.

12. The system of any one of claims 1-11, wherein a distance between the first surface of the second foam element and the second surface of the first foam element decreases when the first sealing element and the second sealing element are moved from the unlocked position to the locked position.

13. The system of any one of claims 1-12, wherein the system is configured to prevent the at least one tube from being bent, curved, or deformed beyond a predetermined threshold when the at least one tube is secured by the at least one of the first sealing element or the second sealing element being moved to the locked position.

14. The system of any one of claims 1-13, wherein a compressive force applied by the first foam element and the second foam element when the at least one of the first sealing element or the second sealing element is moved to the locked position is distributed evenly on the outer wall of the at least one tube.

15. The system of any one of claims 1-14, wherein the first plurality of holes is arranged in a first series of columns, and wherein the second plurality of holes is arranged in a second series of columns;
wherein the first plurality of holes is arranged so as to create a first matrix of holes, and wherein the second plurality of holes is arranged so as to create a second matrix of holes; and
wherein the first matrix of holes comprises a first set of input holes and a first set of output holes, and wherein the second matrix of holes comprises a second set of input holes and a second set of output holes.
